# EUROPÄISCHE PATENTSCHRIFT

(11) **EP 1 223 198 B1**
(45) Veröffentlichungstag und Bekanntmachung des Hinweises auf die Patenterteilung: **25.02.2004**
(21) Anmeldenummer: 01129239.8
(22) Anmeldetag: 11.12.2001
(51) Int. Cl.: C09B 61/00

(54) **Verfahren zur Entwicklung einer umwelt-und gesundheitsfreundlichen Rohstoffgrundlage auf der Basis von Waid (isatis tinctoria L.)**
Process for the development of an environmentally desirable raw material based on woad (isatis tinctoria L.)
Procédé pour le développement d un matériau favorable à l environnement à la base de guède (isatis tinctoria L.)

(30) Priorität: 13.12.2000 DE 10062529
(43) Veröffentlichungstag der Anmeldung: 17.07.2002
(73) Patentinhaber: Bita GmbH, Niederlassung Thüringen, 99192 Neudietendorf (DE)
(72) Erfinder: Feige, Albrecht, 99192 Ingerslehen (DE); Dornberger, Klausjürgen, Dr., 99423 Weimar (DE); Dahse, Hans-Martin, Dr., 99423 Weimar (DE); Hilliger, Matthias, Dr., 07749 Jena (DE); Künkel, Waldemar, Prof., 07749 Jena (DE); Stelzner, Axel, Prof., 99441 Göttern (DE)
(74) Vertreter: Späth, Volker

(56) Entgegenhaltungen:
- DD-A- 243 823
- DE-U- 29 601 505
- US-A- 5 116 997

## Beschreibung

Die Naturpflanze Waid (Isatis tinctoria L.) bietet ein vielfältig ausnutzbares Rohstoffpotential mit seit langem bekannten ausgezeichneten Eigenschaften.

Waid war bis zum Anfang des Mittelalters die einzige Quelle zum Blaufärben von Textilien. Insbesondere in Thüringen wurde Waid im großen Umfang angebaut. Mit der späteren Entwicklung des preisgünstigeren synthetischen Indigos wurde der Waidanbau verdrängt. Erst seit etwa zwei Jahrzehnten besteht wieder ein verstärktes Interesse an der Waidpflanze, nachdem sich gezeigt hat, daß Waid nicht nur zur Farbstoffgewinnung interessant ist, sondern auch Verwendung auf Grund seiner fungiziden und insektiziden Wirkung finden kann.

Als Bautenschutzmittel sind vielfältige Imprägnierungen und Farbanstriche bekannt, z.B. solche, die auf der Basis von Kalk, Leim und Kasein beruhen. Diese Anstriche sind allerdings nur für Innenräume geeignet. Sie haben nur kurze Aufbewahrungszeiten und werden bei Zutritt von Luftsauerstoff unbrauchbar.

Des weiteren werden Farbanstriche auf der Basis von organischen Lösungsmitteln mit entsprechendem Fungizidzusatz sowie Fluate eingesetzt. Diese Substanzen führen zu einer starken Umweltbelastung und sind biologisch kaum oder nur schwer abbaubar. Die Herstellung von Bautenschutzmitteln aus Waidgärsaft hat zu einer Wiederbelebung des Waidanbaus in Thüringen geführt. Zu seiner Gewinnung wird die geerntete Waidpflanze grob zerkleinert und in Wannen fermentiert. Nach ca. einwöchiger Fermentationsdauer wird der Saft abgepreßt und bis zur Verwendung aufbewahrt (Gebrauchsmuster DE 296 01 505 U1). Weiterhin ist aus der Patentschrift DD 243 823 A3 ein Verfahren zur Herstellung von witterungsunabhängigen Anstrichfarben, Bindemitteln und Beizen zur Behandlung von Innen- und Aussenflächen bekannt, in dem vorerst die Blätter der Waidpflanze gewaschen, gepresst und zerkleinert werden.

Die erhaltene Blattmasse (Waidmus) wird zur Gärung gebracht, gepresst und anschließend getrocknet. Die so entstandene Trocken-Waidmasse ist unbegrenzt lagerfähig, und es erfolgt keine Fäulnisbildung. Danach wird eine:Mischung aus getrocknetem pulverisiertem Waid mit Zusätzen von Warmwasser und Kalk gekocht und durchgesiebt.

Bisher wurden insgesamt 44 Naturstoffe in Färberwaidblättern detektiert (Honda, G. et al., Planta Med. 38, 275-278, 1980, Hartleb, I. und Seifert, K., Planta Med. 60, 578-578, 1994 und Planta Med. 61, 95-96, 1995, Seifert, K. und Unger, W., Z Naturforsch. 49c, 44-48, 1994), von denen sich besonders Tryptanthrin, Indolyl-3-acetonitril und p-Cumarsäuremethylester als Verbindungen mit fungizider und insektizider Wirkung erwiesen.

Im Gärsaft des Färberwaids konnten die Verbindungen Trytanthrin und Indolyl-3-acetonitril in durchschnittlichen Konzentrationen von 0,7-19 mg/ml (1-20 ppm) nachgewiesen werden. Dagegen war p-Cumarsäuremethylester in den untersuchten Gärsaftchargen bisher nicht nachweisbar.

Entsprechend den mikrobiologischen Untersuchungen sind die ermittelten Tryptanthrin- und Indolyl-3-acetonitril-Konzentrationen wirksam gegenüber holzzerstörenden Pilzen wie den Weißfäuleerreger (Trametes versicolor), den Hausschwamm (Serpula lacrymans) sowie den Kellerschwamm (Coniophora puteana). Die Anwendung des Waidrohsaftes als Grundlage für Holz- und Bautenschutzmittel weist einen Nachteil auf, der dadurch gekennzeichnet ist, dass die Arbeiten mit Waidprodukten zu starken Geruchsbelästigungen führen.

Neben der enzymatischen Bildung von Sulfiden aus den im Färberwaid enthaqltenen. Senfölglucosiden ist offensichtlich auch Skatol als typischer Facesgeruchsbildner für den produktionstypischen Geruch verantwortlich. Eine Vielzahl der im Waidrohsaft enthaltenen biogenen Wirkstoffe sowie Sekundärmetabolite, deren Biosynthese über Tryptophan läuft, wird durch enzymatische Prozesse zu Skatol abgebaut. Der enzymatische Abbau der Metabolite bzw. Wirkstoffe erfolgt nicht nur durch pflanzliche Enzyme, sondern ist vor allem auch durch den relativ hohen Keimgehalt der Rohsäfte mit den für Waidpflanzen typischen Mikroorganismen und den dadurch bedingten mikrobiellen Abbau bedingt.

Nach der mikroskopischen Beurteilung ist der Keimgehalt im Waidrohsaft ausschließlich auf Bakterien und zwar auf drei verschiedene stäbchenförmige bzw. waidpflanzentypische kokkoide Arten mit einer Keimzahl in der Größenordnung von 10⁶/ml zurückzuführen. Die mikrobielle Population dürfte die Ursache für die begrenzte Lagerfähigkeit der Endprodukte sein.

Trotz des Gehaltes an antimikrobiellen Wirkstoffen führt die hohe Konzentration an Primärmetaboliten (Aminosäuren, Glukose) im Rohsaft zu einem unkontrollierten mikrobiellen Wachstum bei längerem Lagern der Rohsäfte. Der relativ hohe Keimgehalt der Waidrohsäfte und der daraus hergestellten Produkte wie Lasuren, Farben und verschiedene Arten von Imprägnierungen muss als Ursache für deren gelegentliche Instabilitäten angesehen werden.

Aufgabe der Erfindung ist es, einen Waidrohsaft als Grundlage für Holz- und Bautenschutzmittel mit verbesserten Eigenschaften, d.h. ohne Geruchsbelästigung und geringer Lebendkeimzahl sowie ausreichender Stabilität zur Verfügung zu stellen, um somit die Haltbarkeit der Folgeprodukte zu stabilisieren.

Die Aufgabe wird erfindungsgemäß dadurch gelöst, dass der Waidrohsaft eine oxidative Behandlung erfährt.

Demgemäß betrifft die Erfindung die Herstellung eines stabilisierten, geruchsneutralen Waidrohsaftes, dadurch gekennzeichnet, dass man dem mit Kalk bereits vorbehandelten Waidrohsaft Wasserstoffperoxid zusetzt. Durch den Zusatz von Wasserstoffperoxid kann überraschenderweise eine positive Beeinflussung der Rohsaft-Geruchsnote erreicht werden.

Durch Behandlung mit 0,5 bis 30 Vol.-%, vorzugsweise 3 bis 20 Vol.-%, handelsüblichem Wasserstoffperoxid (Lösung enthaltend ca. 35 % H₂O₂) nach der Gärung und Absetzphase nimmt der ursprünglich braun-schwarz gefärbte Rohsaft ein honigfarbenes Aussehen an und ist weitgehend geruchsneutral. Die fungizide Wirkung des Rohsaftes bleibt erhalten. Sie liegt in der gleichen Größenordnung wie die des Ausgangsproduktes und wird anfänglich durch Wasserstoffperoxid verstärkt, das ebenfalls fungizid wirkt.

Wasserstoffperoxid ist farb- und geruchlos und zerfällt in der Wärme, im Licht in Gegenwart von Staub, Schwermetallen und Alkalien allmählich in Wasser und Sauerstoff. Der oxidative Zerfall kann durch Katalysatoren beschleunigt werden. Da Wasserstoffperoxid gegenüber stärkeren Oxidationsmitteln reduzierend wirkt, kann das überschüssige Peroxid durch Zugabe von Kaliumpermanganat zersetzt werden. Zum Nachweis von Wasserstoffperoxid eignet sich die Umsetzung mit Kaliumdichromat in verdünnter Schwefelsäure. Diese Reaktion führt zu einer vorübergehenden Blaufärbung der Lösung unter Bildung von CrO₅. Die massenspektrometrische Kontrolle von Tryptanthrin und Indolyl-3-acetonitril in Gegenwart von Wasserstoffperoxid ergab im Zeitraum von vier Wochen keine Veränderung.

Durch die Behandlung des mit Kalk bereits vorbehandelten Rohsaftes mit Wasserstoffperoxid wird gleichzeitig der Lebendkeimgehalt auf Null reduziert, so dass der mikrobielle Wirkstoffabbau eingestellt wird. Des weiteren ist eine Verringerung des Trübanteils pflanzlicher und mineralischer Herkunft aus der Verarbeitungstechnologie von großer Bedeutung, da dieser mit den aus der Vergärung des Waid-Blattmaterials stammenden und im Rohsaft enthaltenen Mikroorganismen die Ursache für unerwünschte Nachgärungen mit charakteristischer Geruchsbildung darstellt. Die Wasserstoffperoxid-Behandlung des Rohsaftes führt gleichzeitig zu einer besseren Abtrennung des verbliebenen Trübanteils im Schaum.

Die Anwendung von anderen Oxidationsmitteln, wie Wasserstoffperoxid-Harnstoffadukt oder Natriumperkarbonat, führt zu.keiner Stabilisierung des Waidrohsaftes. In beiden Fällen werden große Mengen benötigt, um die Geruchsbelästigung zu mindern. Des weiteren wird der Rohsaft stark alkalisch, der pH-Wert steigt über 10 an.

Zur Stabilisierung und Konservierung sowie Absicherung der erforderlichen Lagerstabilität wird das Endprodukt gegebenenfalls mit Stabilisatoren, z.B. Clormethyl- und Methylisothiazolinon im Konzentrationsbereich von 0,05 bis 0,2 % Volumenanteilen, vorzugsweise von 0,07 bis 0,15 % Volumenanteilen versetzt.

Zur Einschränkung von potentiellen Gefährdungen durch Waidprodukte sowie deren Inhaltsstoffe Tryptanthrin, Indolyl-3-acetonitril und p-Cumarsäuremethylester wurden diese auf ihre Bioverträglichkeit überprüft. Auf Grund der bestimmungsmäßig toxischen Wirkung von Holzschutzmitteln lag der Schwerpunkt auf der Bestimmung der zytotoxischen und antiproliferativen Wirkung. Für die Untersuchung der zellwachstumbeeinflussenden Wirkung wurden definierte Zell-Linien, wie L-929 und HeLa, angewandt. Alle zur Anwendung getesteten Waidprodukte wiesen eine unbedenkliche Wirksamkeit auf.

Die äußerliche Anwendung von Waidrohsaft auf der Haut zeigt darüber hinaus eine gesundheitsfördernde Wirkung, da es die im Malerhandwerk oftmals auftretenden Hautallergien positiv beeinflußt.

Die Charakteristika der vorliegenden Erfindung sind somit:
1. Die Anwendung von Wasserstoffperoxid zur Stabilisierung und Standardisierung von vorbehandelten Waidrohsäften als Grundlage zur Herstellung von Bauten- und Holzschutzmitteln sowie Dämmstoffen und verschiedenen Imprägnierungen.
2. Die Verwendung derartig behandelter Waidrohsäfte zur Herstellung von Lasuren, Farben und verschiedenen Imprägnierungen.
3. Die technologische Verbesserung der Fest-Flüssig-Trennung.
4. Die Zugabe von Stabilisatoren zur besseren Lagerfähigkeit der Endprodukte.

Die Erfindung wird durch die nachfolgenden Ausführungsbeispiele exemplarisch erläutert. Diese sind aber in keiner Weise als Einschränkung derselben zu verstehen.

### Beispiel 1

Der nach dem Gebrauchsmuster DE 296 01 505 U1 hergestellte bereits mit Kalk vorbehandelte z.B. nach Fermentier ung von Blättern der Waidpflanze und anschließendem Vermischen mit Kalk in einem Kaltpreßverfahren entstehende Waidrohsaft wird unter Rühren portionsweise mit 15 % Volumenanteilen handelsüblichem 35 %ig. Wasserstoffperoxid versetzt. Der so behandelte Waidrohsaft bleibt 24 Std. bei Raumtemperatur stehen. Man erhält ein geruchsneutrales honigfarbenes Produkt, dessen Wirkung über Monate konstant bleibt und das somit weiter verarbeitet werden kann. Gleichzeitig sammelt sich im durch Wasserstoffperoxid-Zugabe entstehenden Schaum der verbliebene Trübanteil an, der bequem getrennt werden kann, z.B. durch Filtration oder Zentrifugation.

### Beispiel 2

Überschüssiges Wasserstoffperoxid wird durch die Zugabe von festem Kaliumpermanganat unter Rühren zerstört. Der qualitative Nachweis erfolgt durch Umsetzung von 1 ml Waidrohsaft mit 1 ml einer gesättigten Kaliumdichromatlösung unter ansäuern mit ca. 5 Tropfen 10 %ig. Schwefelsäure. Blaufärbung zeigt Wasserstoffperoxid an. '

### Beispiel 3

Zum Erreichen der erforderlichen Lagerfähigkeit der Endprodukte erfolgt die Zugabe von Stabilisatoren, z.B. Chlormethyl- und Methylisothiazolinon im Konzentrationsbereich von 0,2 % Volumenanteilen.

### Beispiel 4

Zur Qualitätssicherung einzelner Fertigproduktchargen wurde ein an die DIN 68800 angelehnter Holzklötzchentest und ein Wirksamkeitsschnelltest angewandt. Hier wird der Nachweis der Fungizität im Vergleich zu einer mitgeführten O-Probe erbracht. Der Anwendungsbereich bezieht sich auf Holz im Außenbereich ohne Erdkontakt, wie Holzverkleidungen und Fachwerk, Fenster und Türen, Fensterläden, Profilholz, Balkone, Gartenhäuser, Carports, Gartenmöbel u.a. sowie Holz im Innenbereich wie sichtbares Fachwerk, Decken- und Wandverkleidungen, Dachstühle u.a.. Je nach Saugfähigkeit des Holzes reicht 1 1 Waidimprägnierung für 10-12 m². Die Trockenzeit beträgt 4-5 Stunden bei 23°C und 50 % rel. Luftfeuchte.

## Patentansprüche

1. Verfahren zur Herstellung von stabilisiertem, geruchsneutralem Waidrohsaft, **dadurch gekennzeichnet, dass** man mit Kalk vorbehandelten Waidrohsaft mit Wasserstoffperoxid behandelt.

2. Verfahren nach Anspruch 1, **dadurch gekennzeichnet, dass** Waidrohsaft mit 0,5 bis 30 % Volumenanteilen handelsüblichem Wasserstoffperoxid versetzt wird.

3. Verfahren nach Anspruch 1, **dadurch gekennzeichnet, dass** überschüssiges Wasserstoffperoxid mit Kaliumpermanganat beseitigt wird.

4. Verfahren nach Anspruch 1, **dadurch gekennzeichnet, dass** zum Zeitpunkt der Wasserstoffperoxidzugabe gleichzeitig die Trübstoffabtrennung durch Flotation erfolgt.

## Claims

1. Method of making sterilized, odor-neutral woad raw juice wherein woad raw juice pretreated with potassium is treated with hydrogen peroxide.

2. Method of claim (1) wherein 0.5 to 30 % parts by volume of commercial hydrogen peroxide are added to the woad raw juice.

3. Method of claim (1) wherein excess hydrogen peroxide is eliminated with potassium permanganate.

4. Method of claim (1) wherein at the time at which hydrogen peroxide is added, turbid matter is simultaneously removed by flotation.

## Revendications

1. Procédé de fabrication de jus de guède brut, stabilisé, d'odeur neutre, **caractérisé par** le traitement au moyen de peroxyde d'hydrogène, du jus de guède brut conditionné à la chaux.

2. Procédé selon la revendication 1, **caractérisé par** le mélange au jus de guède brut de peroxyde d'hydrogène provenant du commerce dans un rapport volumique de 0,5 à 30%.

3. Procédé selon la revendication 1, **caractérisé par** l'élimination du surplus de peroxyde d'hydrogène avec du permanganate de potassium.

4. Procédé selon la revendication 1, **caractérisé par le fait qu'**au moment de l'apport de peroxyde d'hydrogène, la séparation par flottation des substances troubles se fait simultanément.
